# EUROPEAN PATENT APPLICATION

(11) **EP 2 273 428 A1**
(43) Date of publication of application: **12.01.2011**
(21) Application number: 09003358.0
(22) Date of filing: 07.03.2009
(51) Int. Cl.: G06Q 10/00

(54) **Computer system, for management of a nationwide intervention network, suitable to provide the re-establishment of normal road conditions, after road accidents**

(30) Priority: 07.03.2008 IT rm20080125
(71) Applicant: Sicurezza e Ambiente S.p.A., 00133 Rome (IT)
(72) Inventor: Cacciotti, Angelo, 00133 Rome (IT)
(74) Representative: Zizzari, Massimo

(57) **Abstract**

Computer system (100), for management of a nationwide intervention network, suitable to provide the re-establishment of normal road conditions, through cleaning and maintenance of road platform and related parts involved in car accidents, comprising:
- a *server* (103), suitable for data acquisition, data storage and data retrieval, with reference to information given as input by one or more central operators, these operators belonging to a national operative Headquarter (102);
- a *central PC* (113), placed in said operative Headquarter (102), suitable to receive some intervention calls coming from some authorized Trusts (101), to dispatch information and directives towards one or more sites (104, 106, 107), said sites being nationwide distributed, and to collect information about intervention results from the same sites (104, 106, 107);
- a computer network, or telecommunication network, (114), realizing a direct or indirect connection between said *server* (103), *central PC* (113) and sites (104, 106, 107) that are distributed all around the nation.

## Description

### TECHNICAL FIELD

The present invention concerns a computer system, and a related method, able to manage an information flow, with reference to activities addressed to re-establish safe and practicable road conditions, after car accidents.
These activities regard, in particular, the intervention of operators directly on site of accident, and the same operators provide the re-establishment of normal road conditions, through cleaning and maintenance of road platform and related parts, through aspiration and collection of liquids and other polluting materials, eventually lost by vehicles, like i.e. lubricating oils, fuels, parts of vehicles and other types of debris. In particular cases, the intervention can involve the treatment of dangerous goods, hazard substances, and industrial wastes transported on the same vehicles. All the local activities are coordinated and managed by an operative Headquarter, that operates at a national level and that is mainly responsible to collect the intervention requests coming from all the territory, to define the risk factor associated to each event, to find the best qualified operators close to the place of accident, and to manage all the necessary communication and support, in order to have an effective intervention returning normal, safe and practicable road conditions.

The operative Headquarter together with the operators distributed on the national territory constitute the so called road intervention network.

### BACKGROUND ART

As known from the prior art, the problem of management and coordination of a road intervention network has been considered already, and some proper organizational structures have been proposed, able to activate local operators in consequence of an intervention call. These intervention requests can arrive through SOS columns, usually installed on the highways, or through telephone calls directly arriving from Police officers, or again through the specific operators, working on roads and highways. Each telephone call arrives to a national Headquarter that is able to recognize and dispatch the requests to proper resources located on the territory. Naturally, considering this kind of intervention, the time factor is particularly critic. First, because a quick arrival of emergency vehicles on site can save the lives of people involved in the accidents, and then because the quick return to normal, safe and practicable road conditions, permits to minimize the any inconvenience for users of the same road. Another critical element is the proper research of the best qualified operators able to solve other particular problems given by specific risk factors, like i.e. the identification of the lost materials, the related treatment procedures, and the recruitment of the best experts for the same intervention.

All the well known solutions, although using some advanced computer technology, have a certain number of drawbacks, in example:
- the computer equipments, belonging to workers of the operative headquarter and local operators on site, are not connected each other, therefore the communications are all provided by standard telephones, with possible errors in recognition and perception of the real situation on site, with consequent delays in intervention and in requests of first aid;
- there are no trusts or companies, having a database especially designed for this purpose, including a complete information about dangerous goods, according to Italian convention ADR, *dangerous goods,* according to European Directive 67/458 EEC and following amendments, about *wastes,* according to Italian CER regulation, and about the so called "Seveso *RisK"* companies, as defined by Italian Law D. Lgs. 334/1999;
- the actual operative procedures do not include any rational method in order to lead workers to the exact site of accident, trusting more in their self ability to reach the final destination in a short time, and trusting in their personal equipments as maps and navigation systems.
- the actual used technologies do not permit a global and real time coordination of different types of interventions; in some cases some attempts are made using external devices like standard telephones.
All the above drawbacks are critical for the ideal characteristics of a road intervention network, that should guarantee some fast, precise, appropriate and effective actions.

### DISCLOSURE OF INVENTION

Therefore, the main objective of the present invention is to propose a computer system, and a related method, for management of a nationwide intervention network, suitable to provide the re-establishment of normal road conditions, through cleaning and maintenance of road platform and related parts involved in car accidents.

Another objective of the present invention is to provide computer equipments, available to workers of an operative headquarter, to local operators on site, and to other supporting workers, these equipments being perfectly integrated, so that a real time coordination of the intervention activities is possible.

Another further objective is to provide some integrated *databases,* suitable to give an immediate information about risk factors, and consequently to find respective operators able to take in charge the problem, like i.e. treatment of goods that are dangerous for public health and environmental safety.

A further objective is to provide some integrated navigation systems, particularly suitable to lead the workers, in real time, to the exact site of accidents, and some integrated means, able to trace the actions of intervention, and to store the related technical and photographic documents inside the computer system, and in digital format.

Therefore, it is specific subject of the present invention a computer system, for management of a nationwide intervention network, suitable to provide the re-establishment of normal road conditions, through cleaning and maintenance of road platform and related parts involved in car accidents, comprising:
- a *server,* suitable for data acquisition, data storage and data retrieval, with reference to information given as input by one or more central operators, these operators belonging to a national operative Headquarter;
- a *central PC,* placed in said operative Headquarter, suitable to receive some intervention calls coming from some authorized Trusts, to dispatch information and directives towards one or more sites, said sites being nationwide distributed, and to collect information about intervention results from the same sites;
- a computer network, or telecommunication network, realizing a direct or indirect connection between said *server, central PC,* and sites that are distributed all around the nation.
so that a complete management method is realized for a nationwide intervention network, comprising the following steps: collection of intervention calls on the territory; identification of the risk factors and, consequently, one or more qualified operators, close to the area where the intervention is required; management of the complete communication and support, so that the intervention of re-establishment of normal road conditions, through cleaning and maintenance of road platform and related parts involved in car accidents, is done properly; data storage concerning documents of intervention in digital format.

### BRIEF DESCRIPTION OF DRAWINGS

The present invention will now be described for illustrative but not limitative purposes, according to its preferred embodiments, with particular reference to figure of the enclosed drawings, wherein:

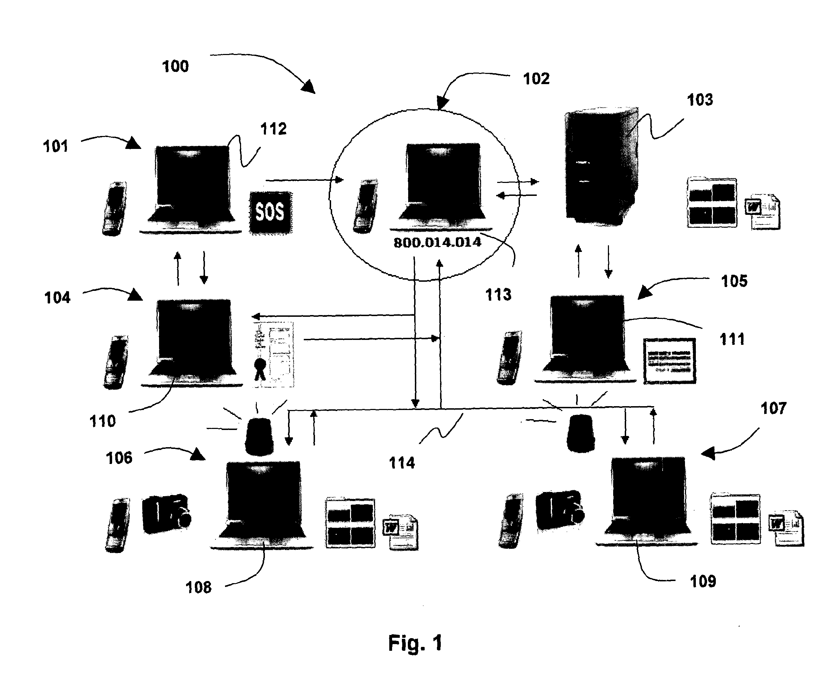

figure 1 is a schematic view of the general architecture related to a computer system for management of a road intervention network.

### BEST MODES FOR CARRYING OUT THE INVENTION

It is here underlined that, in the following, only some of the many conceivable embodiments of the present invention will be described, and that they are just some particular examples that do not introduce any limitations, having the possibility to describe many other embodiments based on the disclosed technical solutions of the present invention.

In figure 1 it is illustrated the general architecture of a computer system 100 for management of an intervention network, suitable to provide the re-establishment of normal road conditions, through cleaning and maintenance of road platform and related parts involved in car accidents. This system, in particular, comprises an operative Headquarter 102 that receives all the intervention calls coming from all the national territory. The requests are received directly, through an Italian toll free phone number "800.014.014", that is active 24 hours per day, 365 days per year.
The Trusts 101, authorized to ask for intervention, are exclusively: Police, road owner company, licensee company, and road maintenance workers.
When a telephone call arrives, a worker of the Headquarter uses his/her terminal 113, in order to query the *database* giving as input the name of the place where the intervention has been requested.
The system, through a query addressed to the *database* resident on server 103, automatically finds the closest *Logistic Operative Center* (L.O.C.) 106 (first call), returns its telephone number, and returns another telephone number belonging to an alternative *Logistic Operative Center* (L.O.C.) 106, as a second possible call, in case that the first one is not available. The same worker calls the local operator and ask him/her to go on site, and to start the activities of re-establishment of normal road conditions, through cleaning and maintenance of the road platform, and related parts involved in the car accident.
This local operator has the duty to arrive on site in a definite quantity of time, this time depending on the day and hour of call (30 minutes for standard working days, 40 . minutes for holidays and nights). The local operator, of the *Logistic Operative Center* (L.O.C.) 106, must communicate immediately his/her arrival time on site, and the departing time at the end of operations, in order to record the intervention inside the *database* of said computer system 100.
The local operator has the duty: to document, taking some photographies, the initial situation (before the intervention), said photos being saved inside the same *database* of computer system 100; to prepare the intervention form, related to involved persons in the accident, and activities provided by operators, to be filled in cooperation with the Police officers.
The communication between the operative Headquarter 102 and the *Logistic Operative Center* (L.O.C.) 106 can be provided directly, using mobile telephones of the latest generation, able to send and receive text messages, audio and video clips, *e-mails,* digital photos, etc., or indirectly, using personal computers, connected to *internet* through a wireless network, and able to send and receive multimedia content through FTP, *web server,* and *electronic mail.*
In any case, since the first contact, the terminals 113 of the operative Headquarter 102, and the remote terminals 108 of the *Logistic Operative Centers* (L.O.C.s) 106, are connected on the same computer system 100.
Furthermore, the worker at the Headquarter takes care of the additional registration activities in case of particular events of *"extraordinary"* or *"relevant'* accidents, as defined by Italian Law D. Lgs. 334/1999, so called *"Legge Seveso".* In such a situation, the Headquarter 102 asks for intervention, not only to the closest *Logistic Operative Center* (L.O.C.) 106, but also to the best and valid companies, working on the entire territory, able to operate in a short time and at the best quality level, according to specific written agreements.
This intervention can be provided very quickly, using the above said company *database,* running inside *server* 103, that makes it possible to find the best operator 107, able to perform the proper treatment of specific materials, possibly leaking on the road platform after a car accident.
Furthermore, considering the serious nature of the same accident, the operator of the *Logistic Operative Center* (L.O.C.) 106, when arrives on site, he/she must:
- give a detailed description of the situation, to the worker of Headquarter 102, so that the latter one can immediately input the information written in the intervention form into the database of the computer system 100;
- document the event with a certain number of photographies, said photos being saved inside the *database* of the computer system 100. The same photos permitting, to the management of the company, to decide the best strategy in order to solve the problems, taking care of relevant priorities, according to specific operative protocols;
- support the Police officers arrived on site, or workers of the road company, in order to provide the first intervention addressed to "re-establish the normal road conditions", so that it is avoided that situation can go worse, while waiting the right operators having the proper equipments.
The return to a safe condition in case of *"relevant accidents",* requires, first of all, the best knowledge about the transported material, that is lost on site after the accident, and the information about the position on the territory of all the industrial plants able to operate in order to prevent risks from *"relevant accidents".*
The above said *database* includes, in addition, the list of plants, associated to classes of environmental risk, so that it is possible to find, as soon as possible, at any place on national territory, the closest plant to the place of accident; the same plants being able to provide production, treatment or storage of that specific dangerous materials, for which the intervention has been requested.
This methodology of intervention, involving local experts and specific technologies able to solve any type of accidents (where dangerous, toxic or contaminated materials are involved), in order to save the public health and the environmental safety, represents the focal point of a strategy able to change the risk factors on the territory (plants treating materials subject to special regulations) in a valuable source of expertise for a proper and immediate solution of the event.
Normally, another operator arrives on site of a *"relevant accident",* the so called area *inspector* 104, that is usually a *"disaster manager",* or a reference person for Police officers, workers of the road company or licensee company, and other companies involved in operations of re-establishment of normal road conditions.
After the return to a safe environmental condition, following a *"relevant accident",* the database is updated with the following records:
- *intervention form* related to involved persons in the accident and activities provided by operators;
- *accident report,* realized by Police, with reference to activities performed in order to return practicable road conditions, to manage the emergency of people and vehicles, and to collect the usual measurement data;
- for relevant accidents, some special reports prepared by experts with reference to general situation and activities provided by operators;
- digital photos of the accident area,
- *intervention form,* with reference to arrival time on site, and departing time, of said operators belonging to *Logistic Operative Centers* (L.O.C.s), description of the intervention activities;
- digital photos of the accident area,
- copy of account invoices, concerning all the works required by specific situations (for *"relevant accidents"*)*.*
All the above information, together with the *"intervention form",* is available through computer network to: Police, insurance companies, road owner company, licensee company.
Naturally, the access to the same information, through computer devices 111 being able to connect directly to server 103, is protected by a *login* and *password,* and a different selection of data is available according to different types of users (user profiles).

As already described, beyond the information concerning the interventions, the *database* includes some additional important data, useful for the quick recognition of materials to be treated, and to research the best operators able to handle the same materials. More in particular, it is stored inside the *database:*
- list of dangerous goods, with reference to their chemical-physical features and proper handling procedures, in respect of the possible events of leakage, fire, or environmental dispersion (R.I.N. code - Risk Identification Number, former *Kemler-Onu);*
- position, on the national territory, of industrial structures able to operate and handling said dangerous transported goods, in order to prevent further relevant disasters;
- list of plants, associated to class of environmental risk, so that it is possible to find, as soon as possible, at any place on the national territory, the closest one, the same plants being able to provide production, treatment or storage for some specific dangerous materials, for which the intervention has been requested.
Furthermore, in order to lead operators in real time to the exact place of accident, the *database* includes an integrated navigation system, with data about:
- detailed maps representing the national territory, with indications of the best way to reach any destination in the shortest possible time, with particular reference to roads available for special and heavy vehicles.

Therefore, the above examples show that the present invention achieves all the proposed objectives. In particular, it proposes a computer system, and a related method, for management of a nationwide intervention network, suitable to provide the re-establishment of normal road conditions, through cleaning and maintenance of road platform and related parts involved in car accidents.

Then, the same invention provides some computer equipments, available to workers of the operative headquarter, to local operators on site, and to other supporting workers, these equipments being perfectly integrated, so that a real time coordination of the intervention activities is possible.

Again, the present invention provides some integrated *databases,* suitable to give an immediate information about risk factors, and consequently to find respective operators able to take in charge the problem, like i.e. treatment of goods that are dangerous for public health and environmental safety.

Furthermore, the described invention provides some integrated navigation systems, particularly suitable to lead the workers, in real time, to the exact site of accidents, and some integrated means, able to trace the actions of intervention, and to store the related technical and photographic documents inside the computer system, and in digital format.

The present invention has been described for illustrative but not limitative purposes, according to its preferred embodiments, but it is clear that modifications and/or changes can be introduced by those skilled in the art without departing from the relevant scope, as defined in the enclosed claims.

## Claims

1. Computer system (100), for management of a nationwide intervention network, suitable to provide the re-establishment of normal road conditions, through cleaning and maintenance of road platform and related parts involved in car accidents, **characterized in that** comprising:
- at least a primary device (103), so called *server,* suitable for data acquisition, data storage and data retrieval, with reference to information given as input by one or more central operators, these operators belonging to a national operative Headquarter (102);
- at least a secondary device (113), so called *central PC,* placed in said operative Headquarter (102), suitable to receive some intervention calls coming from some authorized Trusts (101), to identify the nature of the released material according to the respective R.I.N. code (Risk Identification Number, former *Kemler-Onu*)*;* to find the closest professional service available for solving the problem; to dispatch information and directives towards one or more sites (104, 106, 107), said sites being nationwide distributed, and to collect information about intervention results from the same sites (104, 106, 107);
- a computer network, or telecommunication network, (114), realizing a direct or indirect connection between said *server* (103), *central PC* (113), and sites (104, 106, 107) that are distributed all around the nation,
so that a complete management method is realized for a nationwide intervention network, comprising the following steps:
- collection of intervention calls on the territory;
- identification of the nature of the released product (definition of risk factor related to the occurred event);
- research of a professional service available for solving the problem (one or more qualified operators close to the accident area);
- management of the complete communication and assistance, so that the intervention of re-establishment of normal road conditions, through cleaning and maintenance of road platform and related parts involved in car accidents, is done properly and as soon as possible.
- data storage concerning the documents of intervention in digital format.

2. Computer system (100), for management of a nationwide intervention network, according to previous claim 1, wherein said authorized Trusts (101) are: Police, road owner company, licensee company, road maintenance workers, and **characterized in that** further comprising:
- a local computer device (112), associated to each respective authorized Trust (101), able to transmit an intervention call, said device being temporary or permanently connected to said computer network or telecommunication network (114).

3. Computer system (100), for management of a nationwide intervention network, according to one or more of previous claims, wherein said sites (104, 106, 107) distributed all around the nation are composed of: *Logistic Operative Centers* (L.O.C.s) for standard intervention (106), *Logistic Operative Centers* (L.O.C.s) for relevant accidents (107), and area Inspectors (104), **characterized in that** further comprising:
- a local computer device (108), associated to each respective *Logistic Operative Center* (L.O.C.) for standard intervention (106), able to receive input information by a local operator;
- a local computer device (109), associated to each respective *Logistic Operative Center* (L.O.C.) for relevant accidents (107), able to receive input information by a local operator;
- a local computer device (110), associated to each respective area Inspector (104), able to receive input information by a local operator.

4. Computer system (100), for management of a nationwide intervention network, according to one or more of previous claims, **characterized in that** further comprising:
- a local computer device (111), associated to each respective site of: Police, insurance company, road owner company, licensee company; said device (111), being able to retrieve data, concerning intervention calls, stored in said *server* (103), and said device (111) being temporary or permanently connected to said computer network or telecommunication network (114).

5. Computer system (100), for management of a nationwide intervention network, according to one or more of previous claims, **characterized in that** further comprising:
- *a relational database management system* (RDBMS), installed in said *server* (103), suitable for data acquisition, data storage and data retrieval,
said data being related to:
- *intervention form,* with reference to arrival time on site, and departing time, of said operators of *Logistic Operative Centers* (L.O.C.s), description of the activities related to intervention;
- digital photos of the accident area,
said data being available from outside, at different levels of access and details, according to different user profiles.

6. Computer system (100), for management of a nationwide intervention network, according to one or more of previous claims, **characterized in that** further comprising:
- *a relational database management system* (RDBMS), installed in said *server* (103), suitable for data acquisition, data storage and data retrieval,
said data being related to:
- *intervention form* related to involved persons in the accident and activities provided by operators;
- *accident report,* realized by Police, with reference to activities performed in order to return practicable road conditions, to manage the emergency of people and vehicles, and to collect the usual measurement data;
- for relevant accidents, some special reports prepared by experts with reference to general situation and activities provided by operators;
- digital photos of the accident area,
- *intervention form,* with reference to arrival time on site, and departing time, of said operators of *Logistic Operative Centers* (L.O.C.s), description of the activities related to intervention;
- digital photos of the accident area,
- copy of account invoices, concerning all the works required by the specific situations (for relevant accidents),
said data being available from outside, at different levels of access and details, according to different user profiles.

7. Computer system (100), for management of a nationwide intervention network, according to one or more of previous claims, **characterized in that** further comprising:
- *a relational database management system* (RDBMS), installed in said *server* (103), suitable for data acquisition, data storage and data retrieval,
said data being related to:
- list of dangerous goods, with reference to their chemical-physical features and proper handling procedures, in respect of the possible events of leakage, fire, or environmental dispersion (R.I.N. code - Risk Identification Number, former *Kemler-Onu);*
- position, on national territory, of industrial structures able to operate and handling said dangerous transported goods, in order to prevent further relevant disasters;
- list of plants, associated to class of environmental risk, so that it is possible to find, as soon as possible, at any place on the national territory, the closest to the place of accident, the same plants being able to provide production, treatment or storage for that specific dangerous materials, for which the intervention has been requested,
said data being available from outside, at a different levels of access and details, according to different user profiles.

8. Computer system (100), for management of a nationwide intervention network, according to one or more of previous claims, **characterized in that** further comprising:
- *a relational database management system* (RDBMS), installed in said *server* (103), suitable for data acquisition, data storage and data retrieval,
said data being related to:
- detailed maps representing the national territory, with indications of the best way to reach any destination in the shortest possible time, with particular reference to roads available for special and heavy vehicles,
so that an integrated navigation system is directly available, and it is particularly suitable to lead operators in real time to the exact place of accident.

9. Computer system (100), for management of a nationwide intervention network, according to one or more of previous claims, **characterized in that**:
- said network (114) is a national mobile telephone network, and the respective central devices (113) and local devices (108, 109, 110, 111, 112) are given by one or more mobile telephones of the latest generation, able to send and receive text messages, audio and video clips, *e-mails,* and digital photos.

10. Computer system (100), for management of a nationwide intervention network, according to one or more of previous claims, **characterized in that**:
- said network (114) is a national wireless computer network, and the respective central devices (113) and local devices (108, 109, 110, 111, 112) are given by one or more personal computers, connected to *internet,* and able to send and receive multimedia content through FTP, *web server,* and *electronic mail.*
